# EUROPÄISCHE PATENTANMELDUNG

(11) **EP 0 948 236 A2**
(43) Veröffentlichungstag der Anmeldung: **06.10.1999**
(21) Anmeldenummer: 99440053.9
(22) Anmeldetag: 12.03.1999
(51) Int. Cl.: H04Q 11/04

(54) **Verfahren und Vorrichtung zur Mehrfachausnutzung eines Telekommunikationskanals**

(30) Priorität: 28.03.1998 DE 19813936
(71) Anmelder: ALCATEL, 75008 Paris (FR)
(72) Erfinder: Lautenschlager, Wolfgang, 71287 Weissach-Flacht (DE); Weik, Hartmut, 70195 Stuttgart (DE); Schmoll, Siegfried, 71282 Hemmingen (DE)
(74) Vertreter: Menzietti, Domenico, Dipl.-Ing

(57) **Zusammenfassung**

Eine Vorrichtung und ein Verfahren zur Mehrfachausnutzung eines Telekommunikationskanals, bei dem Basisanschlüsse (BA) von Endgeräten (PBX₁, PBX₂) mit Nutzkanälen und jeweils einem zugehörigen Signalisierungskanal mittels einer multiplexenden Zusatzeinrichtung zusammengefaßt und auf einen einzigen Primärmultiplexeranschluß (mPRA) abgebildet werden, sind dadurch gekennzeichnet, daß der mehrfach genutzte Primärmultiplexeranschluß direkt einer Vermittlungseinrichtung zugeführt wird, daß durch entsprechende Konfigurierung in der Vermittlungseinrichtung einem D16-Subkanal eine Teilnehmersignalisierung zugeordnet wird, und daß die Signalisierungskanäle und die zugehörigen Nutzkanäle für jeden logisch getrennten Anschluß auf einem gemeinsamen physikalischen Anschluß in der Vermittlungseinrichtung separat behandelt werden. Dadurch ist nur noch eine einzige multiplexende Zusatzeinrichtung erforderlich, und anstelle vieler Anschlußeinheiten für jeden logisch getrennten Anschluß in der Vermittlungseinrichtung ist nur noch eine einzige Anschlußeinheit erforderlich, um eine getrennte Behandlung von zwei oder mehr logisch getrennten Anschlüssen an Endgeräten in der Vermittlungseinheit zur ermöglichen.

## Beschreibung

Die Erfindung betrifft eine Vorrichtung sowie ein Verfahren zur Mehrfachausnutzung eines Telekommunikationskanals, bei dem Basisanschlüsse von Endgeräten mit Nutzkanälen und jeweils einem zugehörigen Signalisierungskanal mittels einer multiplexenden Zusatzeinrichtung zusammengefaßt und auf einen einzigen Primärmultiplexeranschluß abgebildet werden.

Eine derartige Vorrichtung sowie das zugehörige Betriebsverfahren sind beispielsweise bekannt aus den vorläufigen TL der Deutschen Bundespost Telekom mit dem Titel "Multiplexübertragungssystem für Glasfaseranschlußleitungen/Kupferanschlußleitungen (ASLMX4FG/ASLMX2KU)", Mai 1993, insbesondere Anhang A: Blockschaltbild des Multiplexübertragungssystems.

Üblicherweise werden Endgeräte in einem Telekommunikationsnetz jeweils über eine eigene Anschlußleitung und über eine eigene Anschlußeinheit (exchange termination = ET) an eine Vermittlungseinrichtung angeschlossen. Die Anschlußleitungen können sogenannte Basisanschlüsse sein, die jeweils zwei Nutzkanäle und einen Signalisierungskanal umfassen, wobei die Nutzkanäle üblicherweise als B-Kanäle und der Signalisierungskanal als D-Kanal bezeichnet werden, die jeweils 64 kbit/s bzw. 16 kbit/s übertragen können. Ein solcher Basisanschluß kann daher maximal zwei Gesprächsverbindungen simultan bedienen. Als Endgeräte (PBX = private branch exchange) kommen übliche Telefone, Telekommunikationsanlagen, Telefaxgeräte oder Datenendgeräte in Frage.

Anstelle von Basisanschlüssen sind bei manchen Anlagen als Leitungen auch sogenannte Primärmultiplexeranschlüsse vorgesehen, die über 30 B-Kanäle à 64 kbit/s einen D-Kanal à 64 kbit/s sowie einen Synchronisationskanal verfügen und die somit 30 Gesprächsverbindungen simultan übertragen können.

Zur besseren Ausnutzung von Basiskanälen im ISDN-System, insbesondere für Sprachübertragungen, wird in der DE 44 23 792 Al ein Verfahren und eine Schaltungsanordnung zur Mehrfachausnutzung vorgeschlagen, wodurch mehrere D-Kanäle auf einen einzigen D-Kanal abgebildet werden.

Diese Grundidee wird in den eingangs zitierten "Vorläufigen TL" der Deutschen Bundespost dahingehend ausgenutzt, daß eine Vermittlungsstelle über einen ersten Multiplexer eine Vielzahl von Kanälen auf einen mehrfach belegten Primärmultiplexeranschluß abbildet, der seinerseits einem zweiten Multiplexer zugeführt wird, welcher die einzelnen Kanäle wieder demultiplext und an die zugehörigen Endgeräte weiterreicht.

Nachteilig bei diesem System ist, daß mindestens zwei Multiplexer verwendet werden müssen, und daß bei jedem Multiplexer für jeden ein- bzw. abgehenden Kanal eine eigene Anschlußeinheit in der Vermittlungseinrichtung vorgesehen sein muß.

Aufgabe der vorliegenden Erfindung ist es demgegenüber, ein Verfahren und eine Vorrichtung der eingangs genannten Art dahingehend zu verbessern, daß nur noch eine einzige multiplexende Zusatzeinrichtung erforderlich ist, und daß anstelle vieler Anschlußeinheiten für jeden logisch getrennten Anschluß in der Vermittlungseinrichtung nur noch eine einzige Anschlußeinheit erforderlich ist, um eine getrennte Behandlung von zwei oder mehr logisch getrennten Anschlüssen an Endgeräten in der Vermittlungseinheit zur ermöglichen.

Hinsichtlich des Verfahrens wird diese Aufgabe dadurch gelöst, daß der mehrfach genutzte Primärmultiplexeranschluß direkt einer Vermittlungseinrichtung zugeführt wird, daß durch entsprechende Konfigurierung in der Vermittlungseinrichtung einem D16-Subkanal eine Teilnehmersignalisierung zugeordnet wird, und daß die Signalisierungskanäle und die zugehörigen Nutzkanäle für jeden logisch getrennten Anschluß auf einem gemeinsamen physikalischen Anschluß in der Vermittlungseinrichtung separat behandelt werden.

Aufgrund der direkten Zuführung des mehrfach genutzten Primärmultiplexeranschlusses an die Vermittlungseinrichtung und eine geeignete Konfigurierung derselben kann der üblicherweise symmetrisch zur multiplexenden Zusatzeinrichtung angeordnete Demultiplexer eingespart werden. Außerdem wird die sonst immer der Anzahl der logisch getrennt zu behandelnden Anschlüsse entsprechende Anzahl von Anschlußeinheiten in der Vermittlungseinrichtung auf eine einzige Anschlußeinheit reduziert.

Besonders bevorzugt ist eine Variante des erfindungsgemäßen Verfahrens, bei der vorgesehen ist, daß Endgeräte über teilweise belegte Primärmultiplexeranschlüsse an die Zusatzeinrichtung angeschlossen sind, und daß in der Vermittlungseinrichtung die Teilnehmersignalisierung für diese Endgeräte jeweils einem D64-Kanal zugeordnet wird.

Auf diese Weise müssen die teilweise belegten Multiplexeranschlüsse nicht über eine eigene Verbindungsleitung an die Vermittlungseinrichtung geführt werden, was einerseits zur Einsparung der entsprechenden Anschlußleitungen durch bessere Ausnutzung der Kapazität des mehrfach genutzten Primärmultiplexeranschlusses, andererseits zur Reduzierung der in der Vermittlungseinrichtung erforderlichen Anschlußeinheiten auf eine einzige Anschlußeinheit führt.

Bei einer bevorzugten Weiterbildung dieser Verfahrensvariante werden sowohl die D64-Kanäle als auch die D16-Subkanäle jeweils einem beliebig wählbaren Zeitschlitz auf dem mehrfach genutzten Primärmultiplexeranschluß zugeordnet. Auf diese Weise können die gleichen, standardmäßig ohnehin vorhandenen Zeitschlitze für unterschiedliche Anwendungen (D16- und D64-Kanäle) eingesetzt werden.

Bei einer weiteren bevorzugten Verfahrensvariante wird ein D64-Kanal auf dem mehrfach genutzten Primärmulitplexeranschluß je nach Bedarf des entsprechenden Endgeräts auf eine Untermenge der maximal möglichen 30 zugeordneten Nutzkanäle eines standardisierten Primärmultiplexeranschlusses beschränkt. Dies ist besonders vorteilhaft, da die vorhandene Signalisierungsfunktion mit minimalem Aufwand an das erfindungsgemäße Verfahren adaptiert werden kann und auf diese Weise die Kanäle des mehrfach genutzten Primärmultiplexeranschlusses optimal ausgenutzt werden können.

Die vorhandenen Schnittstellen können bei einer weiteren bevorzugten Variante des erfindungsgemäßen Verfahrens mehrfach ausgenutzt werden, wenn ein D16-Subkanal wahlweise einem oder beiden Nutzkanälen eines Basisanschlusses zugeordnet wird.

Bei einer vorteilhaften Weiterführung dieser Verfahrensvariante umfaßt ein D16-Subkanal Signalisierungsmöglichkeiten für Aktivierungs- und/oder Deaktivierungsfunktionen des entsprechenden Basisanschlusses und ggf. auch eine Alarmfunktion. Damit sind alle bisher bei Verfahren nach dem Stand der Technik vorgesehenen Funktionen auch weiterhin verfügbar.

In den Rahmen der vorliegenden Erfindung fällt auch eine Vorrichtung zur Mehrfachausnutzung eines Telekommunikationskanals, bei der ein einziger, mehrfach genutzter Primärmultiplexeranschluß vorgesehen ist, der über eine multiplexende Zusatzeinrichtung mehrere Anschlüsse, insbesondere Basisanschlüsse, mit Nutzkanälen und jeweils einem zugehörigen Signalisierungskanal bedient, wobei an die Anschlüsse ISDN-Endgeräte, z.B. Telefone, Datenendgeräte, Telekommunikationsanlagen etc., angeschlossen sind. Gegenüber bekannten Vorrichtungen zeichnet sich die erfindungsgemäße dadurch aus, daß der mehrfach genutzte Primärmultiplexeranschluß direkt mit einer Vermittlungseinrichtung verbunden ist, die so konfiguriert ist, daß einem D16-Subkanal eine Teilnehmersignalisierung zugeordnet werden kann, und daß die Signalisierungskanäle und die zugehörigen Nutzkanäle für jeden logisch getrennten Anschluß auf einem gemeinsamen physikalischen Anschluß in der Vermittlungseinrichtung separat behandelt werden können.

Besonders bevorzugt ist wiederum eine Ausführungsform der erfindungsgemäßen Vorrichtung, bei der vorgesehen ist, daß Endgeräte über teilweise belegte Primärmultiplexeranschlüsse an die Zusatzeinrichtung angeschlossen sind, und daß in der Vermittlungseinrichtung die Teilnehmersignalisierung für diese Endgeräte jeweils einem D64-Kanal zugeordnet werden kann. Dadurch ergibt sich der oben diskutierte Vorteil der Einsparung mehrerer Anschlußleitungen zwischen der multiplexenden Zusatzeinrichtung und der Vermittlungseinrichtung sowie der Reduktion der Anschlußeinheiten innerhalb der Vermittlungseinrichtung auf eine einzige.

Eine weitere, besonders kompakte Ausführungsform der erfindungsgemäßen Vorrichtung zeichnet sich dadurch aus, daß der mehrfach genutzte Primärmultiplexeranschluß mit einer Anschlußeinheit der Vermittlungseinrichtung verbunden ist, und daß die Anschlußeinheit so gestaltet ist, daß sie die von einem bestimmten Signalisierungskanal übertragenen Informationen der zugehörigen Untermenge an benutzten Nutzkanälen des jeweiligen Anschlusses zuordnen kann. Damit wird keine eigene Steuereinheit innerhalb der Vermittlungseinrichtung für die Signalisierungsverarbeitung erforderlich.

Alternativ kann die Vermittlungseinrichtung aber auch eine Steuereinheit umfassen, die die von einem bestimmten Signalisierungskanal übertragenen Informationen der zugehörigen Untermenge an benutzten Nutzkanälen des jeweiligen Anschlusses zuordnen kann. Damit ergibt sich eine Poolfunktion für die Signalisierungsverarbeitung innerhalb der Vermittlungseinrichtung, so daß die gleiche Baugruppe verwandt werden kann, wie sie bei nicht-mehrfachgenutzten Anschlußeinheiten üblich ist.

Eine optimale Anpassung an die jeweiligen Bedürfnisse im Einzelfall ermöglicht eine Ausführungsform, bei der sowohl die Anschlußeinheit als auch die Steuereinheit Signalisierungsinformationen verarbeiten können.

Ganz besonders bevorzugt ist eine Ausführungsform der erfindungsgemäßen Vorrichtung, bei der zwischen der Vermittlungseinrichtung und der Zusatzeinrichtung ein Leitungsendgerät und ein Netzabschluß zur Leitungskodierung bzw. -dekodierung vorgesehen sind. Damit wird eine Signalübertragung über größere Distanzen, insbesondere auch eine Verhinderung von Übersprechen ermöglicht, wobei durch die erfindungsgemäße Anordnung der Vorrichtung am vermittlungseinrichtungsseitigen Ende des mehrfachgenutzten Primärmultiplexeranschlusses lediglich ein einziges Leitungsendgerät und am zusatzeinrichtungsseitigen Ende lediglich ein einziger Netzanschluß erforderlich sind, während bei bekannten Vorrichtungen nach dem Stand der Technik die Anzahl der Paare von Leitungsendgerät und Netzanschluß der Anzahl der zu bedienenden Anschlüsse entspricht.

In einer weiteren vorteilhaften Ausführungsform umfaßt die Zusatzeinrichtung einen Multiplexer, der als Standardbauteil preisgünstig erhältlich ist.

Alternativ oder zusätzlich kann die Zusatzeinrichtung aber auch einen Cross Connector umfassen, der einen besonders flexiblen Einsatz der erfindungsgemäßen Vorrichtung ermöglicht.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand eines Ausführungsbeispiels näher erläutert. Es zeigen:
- Fig. 1: ein Anschlußschema für eine Ausführungsform der erfindungsgemäßen Einrichtung; und
- Fig. 2: eine Vorrichtung nach dem Stand der Technik.

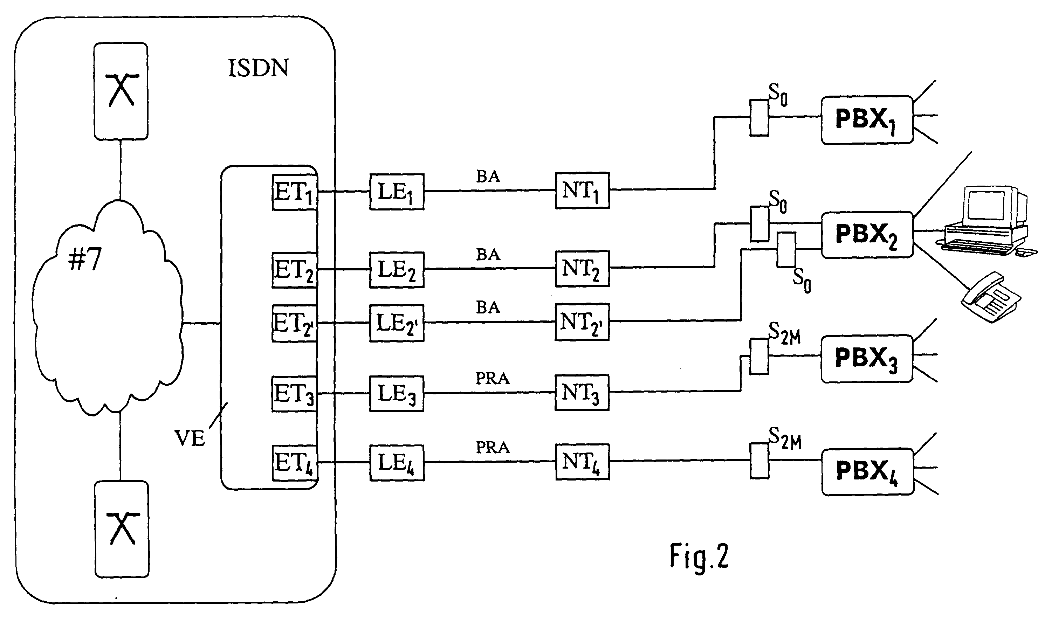

Üblicherweise sind heute bekannte Telekommunikations(=TK)-Systeme so organisiert, daß in einem TK-Netz, beispielsweise einem ISDN-Netz eine Vielzahl von Vermittlungseinrichtungen VE', die die Rufvermittlung an Endgeräte übernehmen, an ein #7-Netz angeschossen sind, über das sie miteinander kommunizieren. Die Endgeräte PBX₁ bis PBX₄, die beispielsweise normale Telefone, Telefaxgeräte, Datenendgeräte, Telefonanlagen und dergleichen umfassen können, sind über geeignete Schnittstellen S₀, S_{2M} und Anschlußleitungen BA, PRA jeweils über eine Anschlußeinheit ET₁ bis ET₄ mit der jeweils zuständigen Vermittlungseinrichtung VE' verbunden. Bei dem in Fig. 2 gezeigten Anschlußbeispiel nach dem Stand der Technik ist z.B. das Endgerät PBX₁ über eine Standardschnittstelle S₀ und eine Basisanschlußleitung BA an die Anschlußeinheit ET₁ der Vermittlungseinrichtung VE' angeschlossen. Zur besseren Signalübertragung über größere Distanzen, insbesondere zur Verhinderung von Übersprechen, ist zwischen der Anschlußeinheit ET₁ und der Schnittstelle S₀ ein Leitungsendgerät LE₁ sowie symmetrisch dazu ein Netzabschluß NT₁ vorgesehen.

Der Basisanschluß BA enthält standardmäßig zwei Nutzkanäle (B-Kanäle) à 64 kbit/s sowie einen Signalisierungskanal (D-Kanal) à 16 kbit/s.

Das weitere Endgerät PBX₂ bei dem in Fig. 2 gezeigten Beispiel ist als Telekommunikationsanlage ausgeführt, an der mehrere Telefone, Datenendgeräte, Telefaxgeräte etc. angeschlossen sein können. Die Verbindung zur Vermittlungseinrichtung VE' wird über zwei Basisanschlüsse BA hergestellt, für die entsprechend zwei Paare von Leitungsendgeräten LE₂, LE₂' und Netzabschlüssen NT₂, NT₂' zwischen der Anschlußeinheit ET₂ und den Schnittstellen S₀ vorgesehen sind.

Weiterhin sind bei dem Beispiel in Fig. 2 auch Endgeräte PBX₃, PBX₄ vorgesehen, welche jeweils über eine Standardschnittstelle S_{2M} und jeweils eine Primärmultiplexeranschlußleitung PRA an die entsprechenden Anschlußeinheiten ET₃, ET₄ der Vermittlungseinrichtung VE' angebunden sind. Auch hier ist wiederum pro Anschlußleitung ein Paar von Leitungsendgeräten LE₃, LE₄ und Netzabschlüssen NT₃, NT₄ zur Verbesserung der Signalübertragung auf den Primärmultiplexeranschlußleitungen PRA vorgesehen.

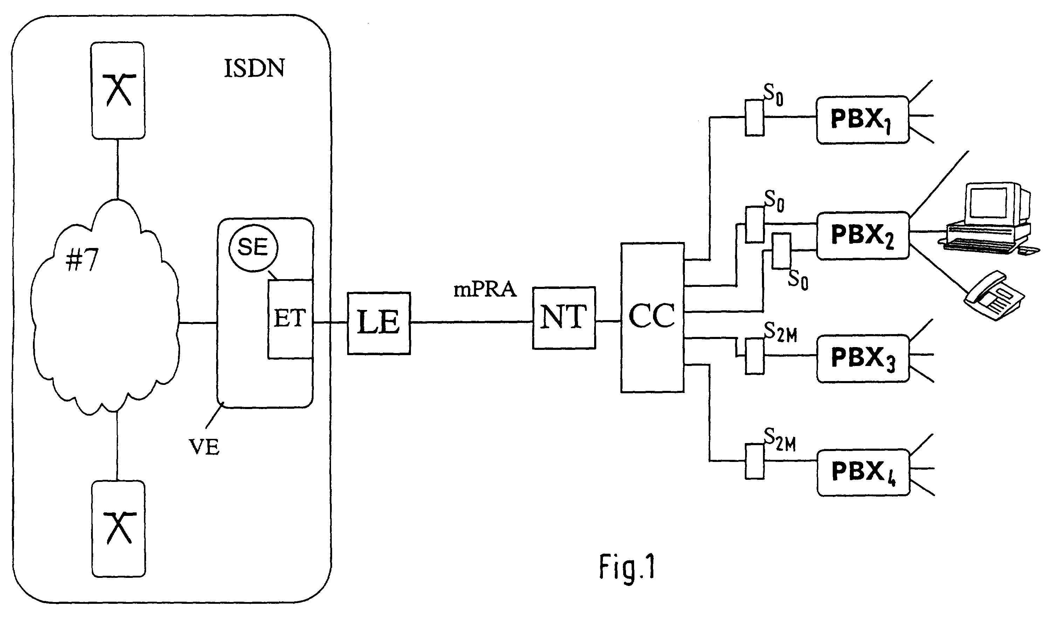

Die in Fig. 1 dargestellte erfindungsgemäße Vorrichtung unterscheidet sich von der in Fig. 2 dargestellten Vorrichtung nach dem Stand der Technik dadurch, daß die von den Endgeräten PBX₁ bis PBX₄ kommenden Basisanschlüsse BA und Primärmultiplexeranschlüsse PRA in eine multiplexende Zusatzeinrichtung, im gezeigten Beispiel einen Cross Connector CC münden, der die Nutzkanäle und entsprechenden Signalisierungskanäle zusammenfaßt und auf einen einzigen mehrfach genutzten Primärmultiplexeranschluß mPRA abbildet. Der mehrfach genutzte Primärmultiplexeranschluß mPRA mündet in eine einzige Anschlußeinheit ET in der Vermittlungseinrichtung VE. Zur Signalverbesserung sind am Beginn und Ende des mehrfach genutzten Primärmultiplexeranschlusses mPRA wiederum jeweils ein Leitungsendgerät LE sowie ein Netzabschluß NT vorgesehen.

Die Vermittlungseinrichtung VE ist so konfiguriert, daß wahlweise einem D64-Kanal und/oder einem D16-Subkanal eine Teilnehmersignalisierung zugeordnet werden kann, und daß die Signalisierungskanäle (D-Kanäle) und die zugehörigen Nutzkanäle (B-Kanäle) für jeden logisch getrennten Anschluß auf einem gemeinsamen physikalischen Anschluß in der Vermittlungseinrichtung VE separat behandelt werden können.

Die Anschlußeinheit ET ist so gestaltet, daß sie die von einem bestimmten Signalisierungskanal übertragenen Informationen der zugehörigen Untermenge an benutzten Nutzkanälen des jeweiligen Anschlusses zuordnen kann. Zusätzlich ist eine Steuereinheit SE in der Vermittlungseinrichtung VE vorgesehen, die ebenfalls die Signalisierungsinformationen verarbeiten kann, so daß eine optimale Anpassung an die jeweiligen Gegebenheiten ermöglicht wird. Das ISDN-Netz liefert der Vermittlungseinrichtung VE einen Mastertakt, der über den Synchronisationskanal des mehrfach genutzten Primärmultiplexeranschlusses mPRA an den Cross Connector CC bzw. eine entsprechend multiplexende Zusatzeinrichtung weitergereicht und zur Ansteuerung der Schnittstellen S₀, S_{2M} genutzt wird.

Die folgende Tabelle 1 zeigt schematisch die Zuordnung der vier in Fig. 1 gezeigten Endgeräte PBX₁ bis PBX₄ auf den einen zur Vermittlungseinrichtung VE führenden Primärmultiplexeranschluß mPRA:

**Tabelle 1**

| | Schnittstelle | D-Kanäle | B-Kanäle | Zugriffstyp | Abbildung auf PRA-Kanal in Schnittstelle ET |
|---|---|---|---|---|---|
| PBX₁ | S₀ | 1-D16 | 2 | BA | D=1, B=2-3 |
| PBX₂ | S₀', S₀" | 2-D16 | 4 | BA | D=4,7, B=5-6,8-9 |
| PBX₃ | S_{2M} | 1-D64 | 8 | PRA | D=10, B=11-18 |
| PBX₄ | S_{2M}' | 1-D64 | 12 | PRA | D=19, B=20-31 |
| VE | ET | 5D | 26 | PRA | |

Die Abbildung eines D16-Kanals auf einen 64 kbit/s-Kanal ist in der folgenden Tabelle 2 schematisch dargestellt:

**Tabelle 2**

| Bit 1 | Bit 2 | Bit 3 | Bit 4 | Bit 5 | Bit 6 | Bit 7 | Bit 8 |
|---|---|---|---|---|---|---|---|
| D1 | D2 | A | 0 | S1 | S2 | S3 | S4 |

| | | | | | | | |
|---|---|---|---|---|---|---|---|
| D1: D-Bit entsprechend einem B1-Kanal innerhalb eines S₀-Rahmens | | | | | | | |
| D2: D-Bit entsprechend einem B2-Kanal innerhalb eines S₀-Rahmens | | | | | | | |
| A: Alarmbit zur Übertragung von Fehler- und Alarmanzeigen an das ferne Ende, wobei "0" den Zustand "fehlerfrei" und "1" den Zustand "Fehler" (Verlust der Synchronisation am Empfangsende) bedeutet: | | | | | | | |
| 0: unbenutzt, auf 0 gesetzt | | | | | | | |
| S1-S4: Servicekanäle mit der folgenden Bedeutung: | | | | | | | |

**Tabelle 2a**

| Sendeseite: | | | | |
|---|---|---|---|---|
| S1 | S2 | S3 | S4 | Information gesendet auf S₀-Schnittstelle |
| 0 | 0 | 0 | 0 | Senden INFO.S0 bei behalten Deaktivierungszustand |
| 0 | 1 | 1 | 1 | Senden INFO.S2 |
| 0 | 0 | 1 | 1 | Senden INFO.S4 bei Empfang von INFO.S3 |
| | | | | Senden INFO.S2 bei Empfang von anderer INFO |
| 1 | 1 | 1 | 1 | Senden INFO.S0 um Deaktivierung zu starten |

**Tabelle 2b**

| Empfangsseite: | | | | |
|---|---|---|---|---|
| S1 | S2 | S3 | S4 | Information empfangen auf S₀-Schnittstelle |
| 0 | 0 | 0 | 0 | Empfangen INFO.S0, Deaktivierungszustand |
| 0 | 1 | 1 | 1 | Empfangen INFO.S1, Aktivierung durch TE starten |
| 0 | 0 | 1 | 1 | Empfangen INFO.S3, TE ist aktiviert |
| 1 | 1 | 1 | 1 | Empfangen INFO.S0 oder Synchronisationsverlust in aktiviertem Zustand |

Im gezeigten Ausführungsbeispiel sind die 30 B-Nutzkanäle der eine D-Signalisierungskanal sowie der eine Synchronisierungskanal des mehrfach genutzten Primärmultiplexeranschlusses mPRA gerade optimal zur Bedienung der entsprechenden Kanäle an den Endgeräten PBX₁ bis PBX₄ ausgenutzt.

## Patentansprüche

1. Verfahren zur Mehrfachausnutzung eines Telekommunikationskanals, bei dem Basisanschlüsse (BA) von Endgeräten (PBX₁, PBX₂) mit Nutzkanälen und jeweils einem zugehörigen Signalisierungskanal mittels einer multiplexenden Zusatzeinrichtung zusammengefaßt und auf einen einzigen Primärmultiplexeranschluß (mPRA) abgebildet werden,
dadurch gekennzeichnet,
daß der mehrfach genutzte Primärmultiplexeranschluß (mPRA) direkt einer Vermittlungseinrichtung (VE) zugeführt wird, daß durch entsprechende Konfigurierung in der Vermittlungseinrichtung (VE) einem D16-Subkanal eine Teilnehmersignalisierung zugeordnet wird, und daß die Signalisierungskanäle und die zugehörigen Nutzkanäle für jeden logisch getrennten Anschluß auf einem gemeinsamen physikalischen Anschluß in der Vermittlungseinrichtung (VE) separat behandelt werden.

2. Verfahren nach Anspruch 1, dadurch gekennzeichnet, daß Endgeräte (PBX₃, PBX₄) über teilweise belegte Primärmultiplexeranschlüsse (PRA) an die Zusatzeinrichtung angeschlossen sind, und daß in der Vermittlungseinrichtung (VE) die Teilnehmersignalisierung für diese Endgeräte (PBX₃, PBX₄) jeweils einem D64-Kanal zugeordnet wird.

3. Verfahren nach Anspruch 2, dadurch gekennzeichnet, daß sowohl die D64-Kanäle als auch die D16-Subkanäle jeweils einem beliebig wählbaren Zeitschlitz auf dem mehrfach genutzten Primärmultiplexeranschluß (mPRA) zugeordnet werden.

4. Verfahren nach einem der Ansprüche 2 oder 3, dadurch gekennzeichnet, daß ein D64-Kanal auf dem mehrfach genutzten Primärmulitplexeranschluß (mPRA) je nach Bedarf des entsprechenden Endgeräts (PBX₁-PBX₄) auf eine Untermenge der maximal möglichen 30 zugeordneten Nutzkanäle eines standardisierten Primärmultiplexeranschlusses beschränkt wird.

5. Verfahren nach einem der vorhergehenden Ansprüche, dadurch gekennzeichnet, daß ein D16-Subkanal wahlweise einem oder beiden Nutzkanälen eines Basisanschlusses (BA) zugeordnet wird.

6. Verfahren nach Anspruch 5, dadurch gekennzeichnet, daß ein D16-Subkanal Signalisierungsmöglichkeiten für Aktivierungs- und/oder Deaktivierungsfunktionen des entsprechenden Basisanschlusses (BA) und ggf. auch eine Alarmfunktion umfaßt.

7. Vorrichtung zur Mehrfachausnutzung eines Telekommunikationskanals, bei der ein einziger, mehrfach genutzter Primärmultiplexeranschluß (mPRA) vorgesehen ist, der über eine multiplexende Zusatzeinrichtung mehrere Anschlüsse, insbesondere Basisanschlüsse (BA), mit Nutzkanälen und jeweils einem zugehörigen Signalisierungskanal bedient, wobei an die Anschlüsse ISDN-Endgeräte, z.B. Telefone, Datenendgeräte, Telekommunikationsanlagen etc., angeschlossen sind,
dadurch gekennzeichnet,
daß der mehrfach genutzte Primärmultiplexeranschluß (mPRA) direkt mit einer Vermittlungseinrichtung (VE) verbunden ist, die so konfiguriert ist, daß einem D16-Subkanal eine Teilnehmersignalisierung zugeordnet werden kann, und daß die Signalisierungskanäle und die zugehörigen Nutzkanäle für jeden logisch getrennten Anschluß auf einem gemeinsamen physikalischen Anschluß in der Vermittlungseinrichtung (VE) separat behandelt werden können.

8. Vorrichtung nach Anspruch 7, dadurch gekennzeichnet, daß Endgeräte (PBX₃, PBX₄) über teilweise belegte Primärmultiplexeranschlüsse (PRA) an die Zusatzeinrichtung angeschlossen sind, und daß in der Vermittlungseinrichtung (VE) die Teilnehmersignalisierung für diese Endgeräte (PBX₃, PBX₄) jeweils einem D64-Kanal zugeordnet werden kann.

9. Vorrichtung nach Anspruch 7 oder 8, dadurch gekennzeichnet, daß der mehrfach genutzte Primärmultiplexeranschluß (mPRA) mit einer Anschlußeinheit (ET) der Vermittlungseinrichtung (VE) verbunden ist, und daß die Anschlußeinheit (ET) so gestaltet ist, daß sie die von einem bestimmten Signalisierungskanal übertragenen Informationen der zugehörigen Untermenge an benutzten Nutzkanälen des jeweiligen Anschlusses zuordnen kann.

10. Vorrichtung nach Anspruch 7 oder 8, dadurch gekennzeichnet, daß die Vermittlungseinrichtung (VE) eine Steuereinheit (SE) umfaßt, die die von einem bestimmten Signalisierungskanal übertragenen Informationen der zugehörigen Untermenge an benutzten Nutzkanälen des jeweiligen Anschlusses zuordnen kann.

11. Vorrichtung nach Anspruch 9 und 10, dadurch gekennzeichnet, daß sowohl die Anschlußeinheit (ET) als auch die Steuereinheit (SE) Signalisierungsinformationen verarbeiten kann.

12. Vorrichtung nach einem der Ansprüche 7 bis 11, dadurch gekennzeichnet, daß zwischen der Vermittlungseinrichtung (VE) und der Zusatzeinrichtung ein Leitungsendgerät (LE) und ein Netzabschluß (NT) zur Leitungskodierung bzw. -dekodierung vorgesehen sind.

13. Vorrichtung nach einem der Ansprüche 7 bis 12, dadurch gekennzeichnet, daß die Zusatzeinrichtung einen Multiplexer umfaßt.

14. Vorrichtung nach einem der Ansprüche 7 bis 12, dadurch gekennzeichnet, daß die Zusatzeinrichtung einen Cross Connector (CC) umfaßt.
